# EUROPEAN PATENT APPLICATION

(11) **EP 4 611 085 A1**
(43) Date of publication of application: **03.09.2025**
(21) Application number: 25152774.3
(22) Date of filing: 20.01.2025
(51) Int. Cl.: H01M 10/04, H01M 10/0587, H01M 50/483, H01M 50/486

(54) **CYLINDRICAL RECHARGEABLE BATTERY**

(30) Priority: 05.02.2024 KR 20240017628
(71) Applicant: Samsung SDI Co., Ltd., Yongin-si, Gyeonggi-do 17084 (KR)
(72) Inventor: Hong, Hyeoksoo, Yongin-si, Gyeonggi-do 17084 (KR); Kim, Seongseop, Yongin-si, Gyeonggi-do 17084 (KR); Yoon, Seok Joon, Yongin-si, Gyeonggi-do 17084 (KR)
(74) Representative: Gulde & Partner

(57) **Abstract**

A cylindrical rechargeable battery is provided that includes: an electrode assembly having an internal space at an innermost side thereof; a cylindrical can accommodating the electrode assembly; and a deformation preventing member that is made of an elastically deformable material. The deformation preventing member is provided with ends spaced apart from each other and such that the deformation preventing member overlaps itself. The deformation preventing member is positioned in the internal space of the electrode assembly and elastically supports the electrode assembly.

## Description

### BACKGROUND

### (a) Field

The present disclosure relates to a cylindrical rechargeable battery.

### (b) Description of the Related Art

A rechargeable battery is rechargeable battery that may be repeatedly charged and discharged, unlike a primary battery that may not be recharged. A small-capacity rechargeable battery having a single pack electrode assembly is used in small portable electronic devices, such as mobile phones, camcorders, and the like. A large-capacity rechargeable battery having several tens of electrode assemblies connected to each other is widely used as a motor-driving power source, such as in an electric scooter, a hybrid vehicle, or an electric vehicle.

A rechargeable battery can be manufactured in various shapes. Among these, a cylindrical rechargeable battery includes a cylindrical electrode assembly, a cylindrical can accommodating the electrode assembly and an electrolyte, and a cap assembly coupled to an upper opening of the can to seal the can and allow a current generated from the electrode assembly to flow to an external device.

In a typical cylindrical rechargeable battery, a negative electrode repeatedly undergoes relatively large expansions and contractions. In the cylindrical rechargeable battery, a deformation force caused by expansions and contractions may not be resolved, and may result in deformation such as warpage inside the electrode assembly.

### SUMMARY OF THE DISCLOSURE

The present disclosure solves the above-described conventional problem, and an object of the present disclosure provides a cylindrical rechargeable battery that may prevent warpage from occurring. However, the technical problems to be solved by the present disclosure are not limited to the above described problems, and other objects not mentioned herein will be understood from the following description by those skilled in the art.

An embodiment of the present disclosure provides a cylindrical rechargeable battery including: an electrode assembly having an internal space at an innermost side of the electrode assembly; a cylindrical can accommodating the electrode assembly; and a deformation preventing member made of an elastically deformable material, with ends of the deformation preventing member spaced apart and such that the deformation preventing member overlaps itself, the deformation preventing member being positioned in the internal space of the electrode assembly, and the deformation preventing member elastically supporting the electrode assembly. The deformation preventing member may in particular prevent permanent deformation of the electrode assembly. The deformation preventing member may generate a force acting on an inside of the electrode assembly from a central area of the cylindrical rechargeable battery. The force may act in a radially outward direction.

The electrode assembly may further include a first electrode plate, a second electrode plate, and a separator interposed between the first electrode plate and the second electrode plate, and the first electrode plate, the second electrode plate, and the separator may be wound.

The deformation preventing member may include a shape memory alloy.

The first deformation preventing member may include reinforced plastic.

The cylindrical rechargeable battery may further include a pressing member positioned inside the deformation preventing member and elastically supporting the first deformation preventing member.

The pressing member may be a compression spring.

Another embodiment of the present disclosure provides a cylindrical rechargeable battery including: an electrode assembly that includes a first electrode plate, a second electrode plate, and a separator interposed between the first electrode plate and the second electrode plate, the first electrode plate, the second electrode plate, and the separator being wound so that an internal space is provided at an innermost side of the electrode assembly; a cylindrical can accommodating the electrode assembly; a plurality of support members that are in contact with one of the first electrode plate and the second electrode plate that is disposed on the innermost side of the electrode assembly, the support members being spaced apart from each other; and a deformation preventing member made of an elastically deformable material, the deformation preventing member connecting the support members to each other, and the deformation preventing member including an elastic member that generates an elastic force so that the plurality of support members elastically support the electrode assembly.

The elastic member may include a plurality of unit springs.

One end of the unit springs may be connected to an end of another of the unit springs, and another end of each of the unit springs may be connected to a middle portion of one of the support members.

The elastic member may have a zigzag shape.

Each of the support members may have an arc shape.

Each of the support members may include a shape memory alloy.

Each of the support members may include reinforced plastic.

Two support members may be provided, and the two support members may be positioned on opposite sides of a virtual center of the electrode assembly, and the elastic member may include one unit spring connecting the two support members.

Two support members may be provided, and the two support members may be positioned on opposite sides of a virtual center of the electrode assembly, and the elastic member may be a tube that is filled with fluid, with the tube maintaining its shape even when an external force is applied to the tube.

Another embodiment of the present disclosure a cylindrical rechargeable battery including: an electrode assembly that includes a first electrode plate, a second electrode plate, and a separator interposed between the first electrode plate and the second electrode plate, the first electrode plate, the second electrode plate, and the separator being wound so that an internal space is provided at an innermost side of the electrode assembly; a cylindrical can accommodating the electrode assembly; and a deformation preventing member that is made of an elastically deformable material, the deformation preventing member including a rigid layer attached to one of the first electrode plate and the second electrode plate that is disposed on the innermost side of the electrode assembly, and the deformation preventing member including an adhesion layer attaching the rigid layer to the one of the first electrode plate and the second electrode plate.

The rigid layer may include a shape memory alloy.

The rigid layer may include reinforced plastic.

The adhesive layer may be an adhesive film with an adhesive layer on one surface thereof.

A plurality of rigid layers may be provided, and the plurality of rigid layers may be spaced apart from each other.

According to the cylindrical rechargeable battery of the embodiment of the present disclosure, even if swelling occurs in the inside thereof, the deformation preventing member will maintain an initial shape at the innermost side of the electrode assembly, thereby preventing a short-circuit due to deformation of the electrode plate that is disposed at the innermost side of the electrode assembly.

In addition, it is possible to minimize an increase of stress inside the electrode assembly by allowing a decrease in the inner diameter of the electrode assembly.

### BRIEF DESCRIPTION OF THE DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 illustrates a cross-sectional view of a cylindrical rechargeable battery according to a first embodiment of the present disclosure.
FIG. 2 illustrates an exploded perspective view of the cylindrical rechargeable battery of FIG. 1.
FIG. 3 illustrates a perspective view of a first deformation preventing member.
FIG. 4 illustrates a cross-sectional view of a state in which a first deformation preventing member is installed inside an electrode assembly.
FIG. 5 illustrates a cross-sectional view of a state in which a first deformation preventing member and a pressing member are installed inside an electrode assembly in a cylindrical rechargeable battery according to a second embodiment of the present disclosure.
FIG. 6 illustrates a cross-sectional view of a state in which a second deformation preventing member is installed inside an electrode assembly in a cylindrical rechargeable battery according to a third embodiment of the present disclosure.
FIG. 7 illustrates a cross-sectional view of a modified example of the second deformation preventing member installed inside an electrode assembly in the cylindrical rechargeable battery according to the third embodiment of the present disclosure.
FIG. 8 illustrates a cross-sectional view of another modified example of the second deformation preventing member installed inside an electrode assembly in the cylindrical rechargeable battery according to the third embodiment of the present disclosure.
FIG. 9 illustrates a cross-sectional view of a state in which a third deformation preventing member is installed inside an electrode assembly in a cylindrical rechargeable battery according to a fourth embodiment of the present disclosure.
FIG. 10 illustrates a cross-sectional view taken along line A-A in the electrode assembly and third deformation preventing member of FIG. 9.
FIG. 11 illustrates a cross-sectional view of a modified example of the third deformation preventing member.

### DETAILED DESCRIPTION OF THE EMBODIMENTS

Hereinafter, embodiments of the present disclosure will be described in detail with reference to the accompanying drawings. Prior to description, it should be understood that terms and words used in the specification and the appended claims should not be construed as having common and dictionary meanings, but should be interpreted as having meanings and concepts corresponding to technical ideas of the present disclosure in view of the principle that the inventor can properly define the concepts of the terms and words in order to describe his/her own disclosure as best as possible. Accordingly, since the embodiments described in the specification and the configurations shown in the drawings are merely the most preferable embodiments and configurations of the present disclosure, they do not represent all of the technical ideas of the present disclosure, and it should be understood that various equivalents and modified examples, which may replace the embodiments, are possible at the time of the filing of the present application.

It will be further understood that the terms "comprise, include," "comprising," and/or "including," when used in this specification, specify the presence of the stated features, integers, steps, operations, elements, and/or components but do not preclude the presence or addition of one or more other features, integers, steps, operations, elements, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

When it is explained that two objects are 'identical', this means that these objects are 'substantially identical'. Accordingly, the substantially identical objects may include deviations considered low in the art, for example, deviations within 5 %. In addition, when it is explained that certain parameters are uniform in a predetermined region, this may mean that the parameters are uniform in terms of an average in the corresponding region.

Although the terms "first", "second", and the like are used to describe various elements, these elements are not limited by these terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

In addition, when an element is referred to as "on," "connected to," or "coupled to" another element, the element can be directly connected or coupled to the other element, but it should be understood that intervening elements may be present between each element, or each element may be "connected", "coupled" or "linked" to each other through another element.

As used herein, the term "and/or" includes any and all combinations of one or more of the associated listed items. Further, the use of "may" when describing embodiments of the present disclosure refers to "one or more embodiments of the present disclosure."

Expressions such as "at least one of," when preceding a list of elements, modify the entire list of elements and do not modify the individual elements of the list.

Throughout the specification, unless specifically stated to the contrary, the expression "A and/or B" denotes A, B, or A and B, and the expression "C to D" denotes C or more and D or less.

The expression "at least one of A, B, and C," "at least one of A, B, or C," and "at least one selected from the group consisting of A, B, and C" indicates only A, only B, only C, both A and B, both A and C, both B and C, all of A, B, and C, or variations thereof.

As used herein, the terms "use," "using," and "used" may be considered synonymous with the terms "utilize," "utilizing," and "utilized," respectively. As used herein, the term "substantially," "about," and similar terms are used as terms of approximation and not as terms of degree, and are intended to account for the inherent variations in measured or calculated values that would be recognized by those of ordinary skill in the art.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below.

The terminology used herein is for the purpose of describing particular embodiments and is not intended to be limiting of the present disclosure.

A typical rechargeable battery will be described before describing a cylindrical rechargeable battery according to an embodiment of the present disclosure. That is, a cylindrical rechargeable battery according to an embodiment of the present disclosure will be described in detail with reference to the accompanying drawings.

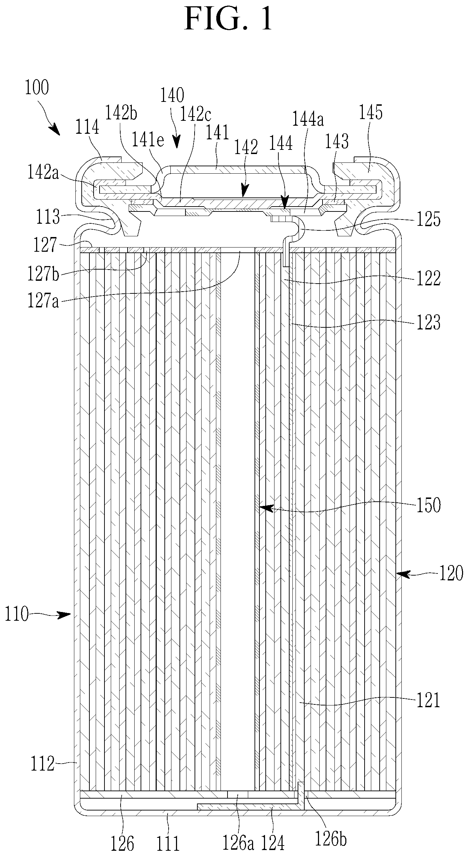

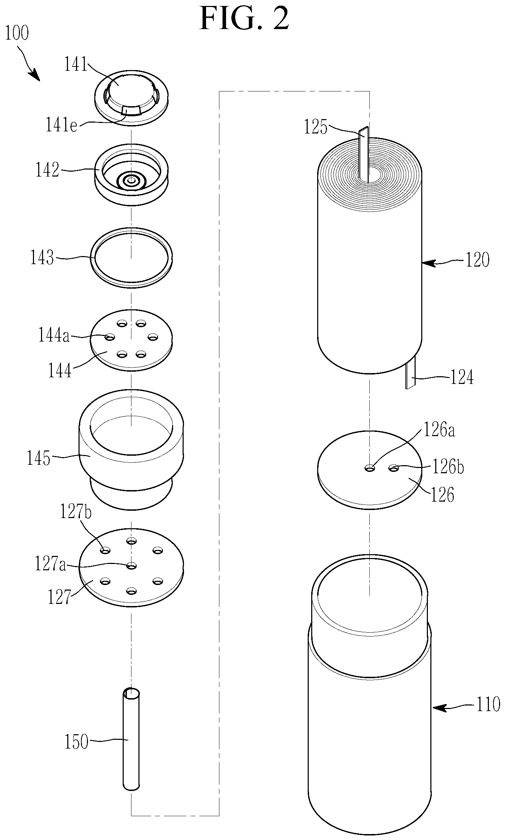

FIG. 1 illustrates a cross-sectional view of a cylindrical rechargeable battery according to a first embodiment of the present disclosure. FIG. 2 illustrates an exploded perspective view of the cylindrical rechargeable battery of FIG. 1.

As shown in FIG. 1 and FIG. 2, a cylindrical rechargeable battery 100 according to an embodiment of the present disclosure includes a cylindrical can 110, an electrode assembly 120, and a cap assembly 140.

The cylindrical can 110 accommodates the electrode assembly 120, which will be described later. The cylindrical can 110 may include a circular bottom part 111 and a cylindrical side part 112 extending upward from the bottom part 111. The upper portion of the cylindrical can 110 is open during the manufacturing process of the cylindrical rechargeable battery 100. Accordingly, during the assembly process of the cylindrical rechargeable battery, the electrode assembly 120 may be inserted into the cylindrical can 110 together with the electrolyte.

The cylindrical can 110 may include steel, a steel alloy, aluminum, an aluminum alloy, or an equivalent thereof. The cylindrical can 110 may have a recessed beading part 113 that is recessed inward at the lower portion of the cap assembly 140 so that the electrode assembly 120 and the cap assembly 140 are not separated to the outside of the rechargeable battery 100. A crimping part 114 bent inward may be provided at the upper portion of the recessed beading part 113.

The electrode assembly 120 may be accommodated inside the cylindrical can 110. The electrode assembly 120 includes a first electrode plate 121, a second electrode plate 122, and a separator 123 interposed between the first electrode plate 121 and the second electrode plate 122. In the electrode assembly 120, the first electrode plate 121, the second electrode plate 122, and the separator 123 are wound with an internal space at the innermost side of the wound structure.

The first electrode plate 121 may be a negative electrode plate, the second electrode plate 122 may be a positive electrode plate, and vice versa. Hereinafter, for better comprehension and ease of description, the the first electrode plate 121 will be described as a negative electrode plate and the second electrode plate 122 will be described as a positive electrode plate.

The negative electrode plate is coated with a negative electrode active material (for example, graphite, carbon, or the like). The positive electrode plate is coated with a positive electrode active material (for example, transition metal oxide (LiCoO2, LiNiO2, LiMn2O4, or the like).

The separator 123 is disposed between the negative electrode plate 121 and the positive electrode plate 122 to prevent a short circuit and to allow movement of lithium ions.

The negative electrode plate 121, the positive electrode plate 122, and the separator 123 may be wound in a substantially cylindrical shape. The negative electrode plate 121 may include copper (Cu) or nickel (Ni) foil, the positive electrode plate 122 may include aluminum (Al) foil, and the separator 123 may include polyethylene (PE) or polypropylene (PP).

A negative electrode tab 124 protruding and extending downward by a certain length may be welded to the negative electrode plate 121. A positive electrode tab 125 protruding upward by a certain length may be welded to the positive electrode plate 122, but the opposite case is also possible. The negative electrode tab 124 may include a copper or nickel material, and the positive electrode tab 125 may include an aluminum material.

The negative electrode tab 124 of the electrode assembly 120 may be welded to the bottom part 111 of the cylindrical can 110. Accordingly, the cylindrical can 110 may operate as a negative electrode. Of course, conversely, the positive electrode tab 125 may be welded to the bottom part 111 of the cylindrical can 110, and, in such a case, the cylindrical can 110 may operate as an anode.

A first insulating plate 126 may be interposed between the electrode assembly 120 and the bottom part 111. The first insulating plate 126 is coupled to the cylindrical can 110, and has a first hole 126a in the center and a second hole 126b outside of the first hole 12a. In other words, the first insulating plate 126 may have a first hole 126a and a second hole 126 arranged at a distance from the first hole 126a. The first insulating plate 126 may prevent the electrode assembly 120 from electrically contacting the bottom part 111 of the cylindrical can 110. In particular, the first insulating plate 126 may prevent the positive electrode plate 122 of the electrode assembly 120 from electrically contacting the bottom part 111. The first hole 126a may allow gas to quickly move upward when a large amount of gas is generated due to an abnormality in the cylindrical rechargeable battery. In addition, the negative electrode tab 124 may extend through the second hole 126b and be welded to the bottom part 111.

The second insulating plate 127 may be interposed between the electrode assembly 120 and the cap assembly 140. The second insulating plate 127 is coupled to the cylindrical can 110, has a first hole 127a in its center, and has a plurality of second holes 127b outside of the first hole 127a. For example, the second insulating plate 127 may have 4 or 6 second holes 127b. The first hole 127a may be arranged at the center of the second insulating plate 127, and the second holes 127b may be arranged surrounding the first hole 127. For example, the second holes 127b can be arranged equidistant from one another on a circular circumference that encircles the first hole 127a.

The second insulating plate 127 may prevent the electrode assembly 120 from electrically contacting the cap assembly 140. in particular, the second insulating plate 127 may limit the negative electrode plate 121 of the electrode assembly 120 from being in electrical contact with the cap assembly 140.

When a large amount of gas is generated due to an abnormality in the cylindrical rechargeable battery, the first hole 127a may allow the gas to quickly move to the cap assembly 140. One of the second holes 127b may allow the positive electrode tab 125 to extend therethrough and thereby be welded to the cap assembly 140. The other second holes 127b may allow the electrolyte to quickly flow into the electrode assembly 120 during the electrolyte injection process.

The cap assembly 140 may include an upper cap 141 having a plurality of through-holes 141 e, a safety vent 142 disposed below the upper cap 141, a connection ring 143 disposed below the safety vent 142, and a lower cap 144 that is disposed below the safety vent 142 and the connection ring 143. The lower cap 144 includes a plurality of through-holes 144a and is electrically connected to the positive electrode tab 125. The lower cap 144 is disposed opposite to the upper cap 141 with the safety vent 142 interposed therebetween.

The cap assembly 140 may further include an insulating gasket 145. The insulating gasket 145 insulates the upper cap 141, the safety vent 142, and the lower cap 144 from the side part 112 of the cylindrical can 110. The insulating gasket 145 may be compressed between the beading part 113 and the crimping part 114, which are included in the side part 112 of the cylindrical can 110.

The through-holes 141e of the upper cap 141 and the through-hole 144a of the lower cap 144 may discharge internal gas to outside of the rechargeable battery 100 when abnormal internal pressure occurs inside the cylindrical can 110. The internal gas moving through the through holes 144a inverts the safety vent 142 upwardly so that the safety vent 142 is electrically separated from the lower cap 144. The internal gas may then be discharged to the outside of the rechargeable battery 100 through the through-hole 141e of the upper cap 141 as the safety vent 142 is torn.

An electrolyte (not shown) may be injected inside the cylindrical can 110. The electrolyte allows lithium ions generated by an electrochemical reaction in the negative electrode plate 121 and the positive electrode plate 122 inside the battery to move during charging and discharging. The electrolyte may include a non-aqueous organic electrolyte that is a mixture of lithium salt and high purity organic solvent. The electrolyte may include a polymer or solid electrolyte using a polymer electrolyte.

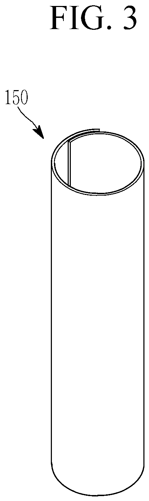

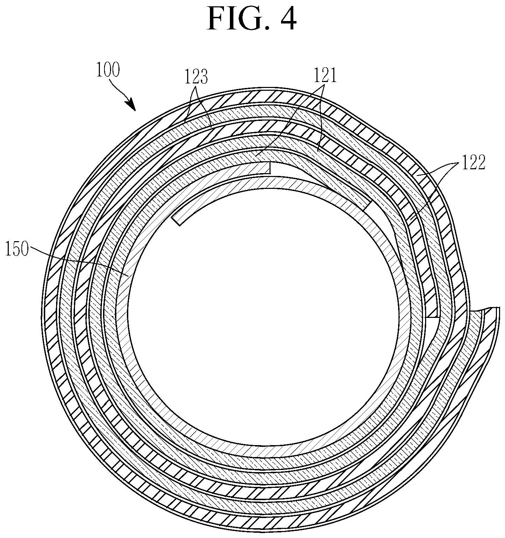

FIG. 3 illustrates a perspective view of a first deformation preventing member 150, and FIG. 4 illustrates a cross-sectional view of a state in which a first deformation preventing member 150 is installed inside an electrode assembly 100.

Referring to FIG. 1 to FIG. 4, the cylindrical rechargeable battery 100 according to the first embodiment of the present disclosure includes the electrode assembly 120, the cylindrical can 110, and a first deformation preventing member 150. Since the electrode assembly 120 and the cylindrical can 110 have been previously described, detailed descriptions thereof will not be repeated.

The first deformation preventing member 150 is made of an elastically deformable material, and ends of the deformation preventing member 150 are separated from each other so that portions of the deformation preventing member 150 overlap each other. The overlapping portions may be portions extending in an axial direction of the electrode assembly 100. The deformation preventing member 150 can have the shape of the lateral surface of a cylinder, with a first end and a second end of the lateral surface overlapping. Viewed along an axial direction, the overlapping area can be an arc of a circle of, for example, between 10° and 120° or between 10° and 60°, for example about 25°. The first deformation preventing member 150 is installed in the inner space of the electrode assembly 120 and elastically supports the electrode assembly 120. Accordingly, even if swelling occurs inside the cylindrical rechargeable battery 100 according to the first embodiment of the present disclosure, the first deformation preventing member 150 maintains the innermost side of the electrode assembly 120 in its initial state at all times, thereby preventing a short circuit due to deformation of the electrode plate disposed at the innermost side of the electrode assembly 120.

In addition, the cylindrical rechargeable battery 100 according to the first embodiment of the present disclosure allows a decrease in the inner diameter of the electrode assembly 120, thereby minimizing an increase in stress inside the electrode assembly 120. To this end, the first deformation preventing member 150 may include a shape memory alloy. Alternatively, the first deformation preventing member 150 may include reinforced plastic.

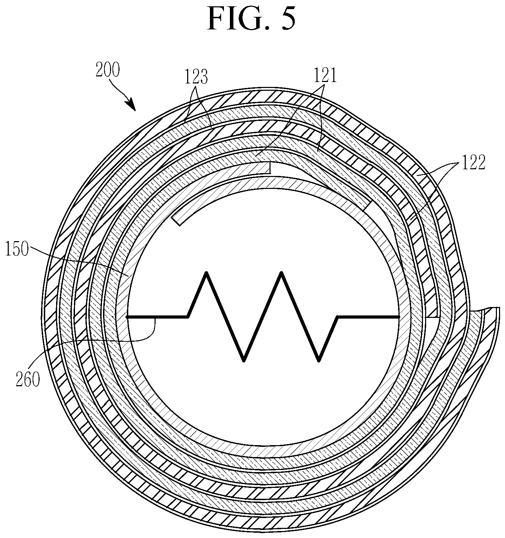

FIG. 5 illustrates a cross-sectional view of a state in which a first deformation preventing member 150 and a pressing member 260 are installed inside an electrode assembly in a cylindrical rechargeable battery according to a second embodiment of the present disclosure.

Referring to FIG. 5, the cylindrical rechargeable battery 200 according to the second embodiment of the present disclosure may further include a pressing member 260. The pressing member 260 is installed inside the first deformation preventing member 150. The pressing member 260 elastically supports the first deformation preventing member 150 so that the first deformation preventing member 150 maintains its initial shape.

The pressing member 260 may be, for example, a compression spring. The pressing member 260 may further improve the elastic force of the first deformation preventing member 150, thereby preventing deformation of the innermost part of the electrode assembly 120.

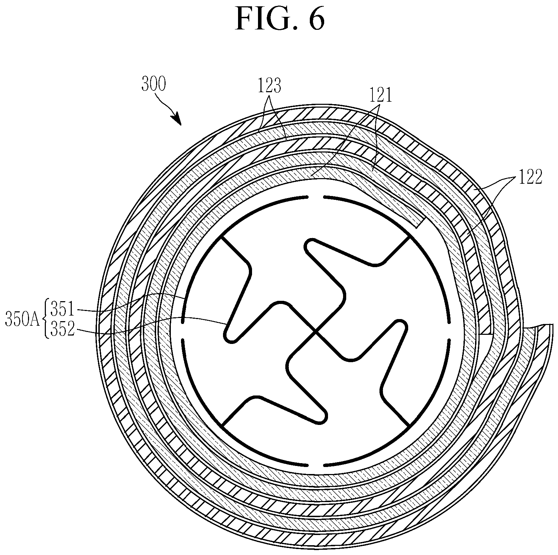

FIG. 6 illustrates a cross-sectional view of a configuration in which a second deformation preventing member 350A is installed inside an electrode assembly in a cylindrical rechargeable battery 300 according to a third embodiment of the present disclosure.

Referring to FIG. 6, the cylindrical rechargeable battery 300 according to the third embodiment of the present disclosure includes the electrode assembly 120 (see FIG. 1), the cylindrical can 110 (see FIG. 1), and a second deformation preventing member 350A. Since the electrode assembly 120 and the cylindrical can 110 have been previously described, detailed descriptions thereof will be omitted.

The second deformation preventing member 350A may prevent deformation of the innermost side of the electrode assembly 120. To this end, the second deformation preventing member 350A includes, for example, a plurality of support members 351 and elastic members 352. The plurality of support members 351 are in contact with one of the first electrode plate 121 and the second electrode plate 122 disposed at the innermost side of the electrode assembly 120. The plurality of support members 351 are spaced apart from each other. In other words, there may be gaps between the support members 351 along an inner circumference of the electrode assembly 120. The support members 351 may have, for example, an arc shape. The support members 351 may include a shape memory alloy. Alternatively, the support members 351 may include reinforced plastic.

The elastic members 352 are made of an elastically deformable material, connect the support members 351 to each other, and generate an elastic force so that the plurality of support members 351 elastically support the electrode assembly 120. The elastic members 352 may include, for example, a plurality of unit springs. Each of the plurality of unit springs may have one end connected to another of the plurality of unit springs and be radially disposed. For example, the unit springs may be disposed extending along a radial direction. The other end of each of the plurality of unit springs may be coupled to a middle portion of one of the support members 351. The elastic members 352 may have a zigzag shape.

The number of unit springs may be three, four, six, or any other suitable number, and the number of support members 351 may also be three, four, six, or any other suitable number. The unit springs may be coupled to the support members 351 in a one-to-one correspondence.

The first deformation preventing member 150 included in the cylindrical rechargeable batteries 100 and 200 according to the first and second embodiments of the present disclosure described above uniformly and elastically supports the entire innermost side of the electrode assembly 120. But the cylindrical rechargeable battery 300 according to the third embodiment of the present disclosure may elastically support sections of the innermost side of the electrode assembly 120. Accordingly, deformation of each section of the innermost side of the electrode assembly 120 may be more efficiently prevented.

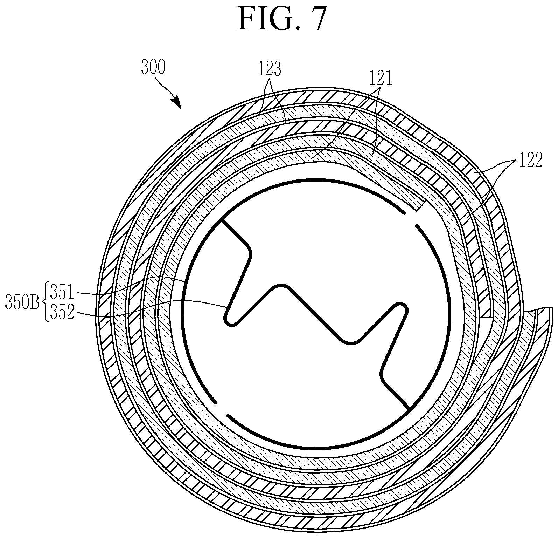

FIG. 7 illustrates a cross-sectional view of a modified example of the second deformation preventing member 350B installed inside an electrode assembly in the cylindrical rechargeable battery 300 according to the third embodiment of the present disclosure.

Referring to FIG. 7, the second deformation preventing member 350B of the cylindrical rechargeable battery 300 according to the third embodiment of the present disclosure may include two support members 351. The two support members 351 may be disposed on opposite sides of the virtual center of the electrode assembly 120. The elastic members 352 may include one unit spring connecting the two support members 351. That is, one unit spring may generate elastic force in, or acting on, the two support members 351.

The second deformation preventing member 350B according to the modified example has a simpler structure than the second deformation preventing member 350A (see FIG. 6) described above. Thus, the manufacturing time for the second deformation preventing member 350B may be shorter and the cost of manufacturing may be reduced.

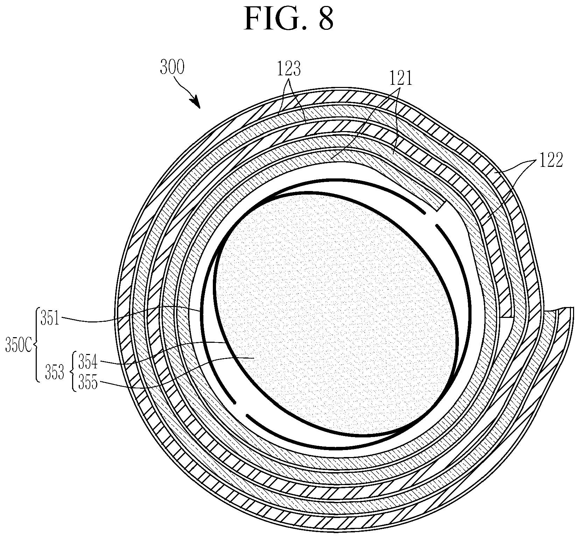

FIG. 8 illustrates a cross-sectional view of another modified example of the second deformation preventing member 350C installed inside an electrode assembly in the cylindrical rechargeable battery 300 according to the third embodiment of the present disclosure.

Referring to FIG. 8, the second deformation preventing member 350C of the cylindrical secondary battery 300 according to the third embodiment of the present disclosure is another modified example and includes two support members 351. The two supporting members 351 may be disposed on opposite sides of the virtual center of the electrode assembly 120.

The elastic member 353 may be a tube 354 that is filled with fluid 355 therein, and the tube 354 can maintain its initial shape even when an external force is applied. The tube 354 may be made of a material that does not react with the electrolyte. The cross-sectional shape of the tube 354 may be elliptical. The fluid 355 filled in the tube 354 may be a gel.

When swelling occurs in the cylindrical rechargeable battery 300 according to the third embodiment of the present disclosure, the support member 351 is restored to its initial position by the elastic member 353 even if deformation occurs at the innermost side of the electrode assembly 120. Accordingly, deformation of the innermost side of the electrode assembly 120 may be prevented. In particular, permanent deformation of the innermost side of the electrode assembly 120 may be prevented In addition, since the amount of electrolyte used may be reduced by the volume occupied by the elastic member 353, manufacturing costs may be reduced.

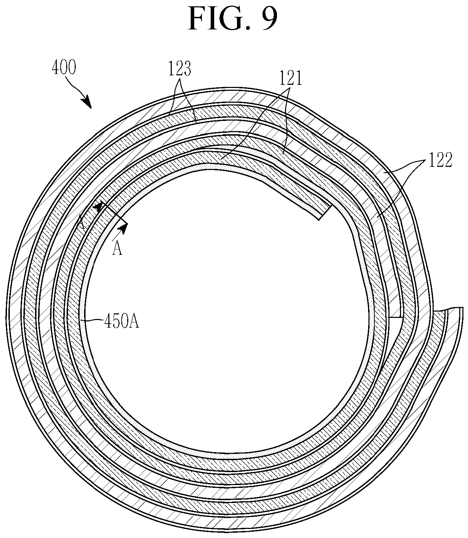

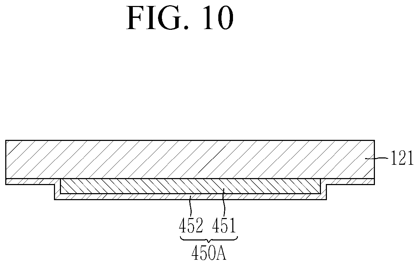

FIG. 9 illustrates a cross-sectional view of a state in which a third deformation preventing member 450A is installed inside an electrode assembly in a cylindrical rechargeable battery 400 according to a fourth embodiment of the present disclosure, and FIG. 10 illustrates a cross-sectional view taken along line A-A in the electrode assembly and third deformation preventing member of FIG. 9.

Referring to FIG. 9 and FIG. 10, the cylindrical rechargeable battery 400 according to the fourth embodiment of the present disclosure includes the electrode assembly 120 (see FIG. 1), the cylindrical can 110 (see FIG. 1), and a third deformation preventing member 450A. Since the electrode assembly 120 and the cylindrical can 110 have been previously described, detailed descriptions thereof will be omitted.

The third deformation preventing member 450A elastically supports the innermost side of the electrode assembly 120 in the same manner as the second deformation preventing member 350A (see FIG. 6) described above. The third deformation preventing member 450A may include a rigid layer 451 and an adhesive layer 452.

The rigid layer 451 is made of an elastically deformable material and is attached to one of the first electrode plate 121 and the second electrode plate 122 disposed at the innermost side of the electrode assembly 120. The rigid layer 451 may include, for example, a shape memory alloy. Alternatively, the rigid layer 451 may include reinforced plastic.

The adhesive layer 452 attaches the rigid layer to one of the first electrode plate 121 and the second electrode plate 122. The adhesive layer 452 may be, for example, an adhesive film having an adhesive layer on one surface thereof.

The third deformation preventing member 450A may improve rigidity of the first electrode plate 121 and the second electrode plate 122 disposed at the innermost side of the electrode assembly 120, which are relatively vulnerable to deformation. Accordingly, deformation of the innermost side of the electrode assembly 120 may be prevented.

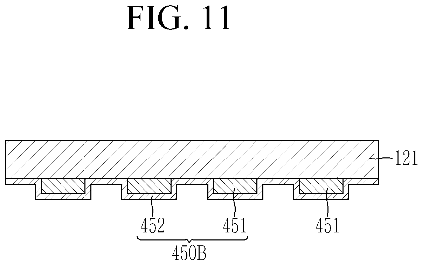

FIG. 11 illustrates a cross-sectional view of a modified example of the third deformation preventing member.

Referring to FIG. 11, the third deformation preventing member 450B includes a plurality of rigid layers 451, and the plurality of rigid layers 451 may be spaced apart from each other. Since the third deformation preventing member 450B according to the modified example includes the plurality of rigid layers 451 having a relatively narrow width, it may more flexibly respond to the deformation of one of the first electrode plate 121 (see FIG. 9) and the second electrode plate 122 (see FIG. 9) disposed on the innermost side of the electrode assembly 120 (see FIG. 2) compared to the third deformation preventing member 450A (see FIG. 10) described above.

Although several embodiments of the present disclosure have been described above, while this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims. Therefore, those skilled in the art will understand that various modifications and other equivalent embodiments of the present disclosure are possible. Consequently, the true technical protective scope of the present disclosure must be determined based on the technical scope of the appended claims.

### <Description of Symbols>

100: cylindrical rechargeable battery
110: cylindrical can
120: electrode assembly
121: first electrode plate
122: second electrode plate
123: separator
140: cap assembly
150: first deformation preventing member
260: pressing member
350A, 350B, 350C: second deformation preventing member
351: support member
352, 353: elastic member
354: tube
355: fluid
450A, 450B: third deformation preventing member
451: rigid layer
452: adhesive layer

## Claims

1. A cylindrical rechargeable battery (100, 200, 400) comprising:
an electrode assembly (120) having an internal space at an innermost side of the electrode assembly (120);
a cylindrical can (110) accommodating the electrode assembly (120); and
a deformation preventing member (150) made of an elastically deformable material, with ends of the deformation preventing member (150) spaced apart and such that the deformation preventing member (150) overlaps itself, the deformation preventing member (150) being positioned in the internal space of the electrode assembly (120), and the deformation preventing member (150) elastically supporting the electrode assembly (120).

2. The cylindrical rechargeable battery (100, 200, 400) of claim 1, wherein the electrode assembly (120) includes a first electrode plate (121), a second electrode plate (122), and a separator (123) interposed between the first electrode plate (121) and the second electrode plate (122), and
wherein the first electrode plate (121), the second electrode plate (122), and the separator (123) are wound.

3. The cylindrical rechargeable battery (100, 200, 400) of claim 1 or claim 2, wherein the deformation preventing member (150) includes a shape memory alloy or reinforced plastic.

4. The cylindrical rechargeable battery (100, 200, 400) of one of claims 1 to 3, further comprising a pressing member (260) positioned inside the deformation preventing member (150) and elastically supporting the deformation preventing member (150).

5. The cylindrical rechargeable battery (100, 200, 400) of claim 4, wherein the pressing member (260) is a compression spring.

6. A cylindrical rechargeable battery (100, 200, 400) comprising:
an electrode assembly (120) that includes a first electrode plate (121), a second electrode plate (122), and a separator (123) interposed between the first electrode plate (121) and the second electrode plate (122), the first electrode plate (121), the second electrode plate (122), and the separator (123) being wound so that an internal space is provided at an innermost side of the electrode assembly (120);
a cylindrical can (110) accommodating the electrode assembly (120);
a plurality of support members (351) that are in contact with one of the first electrode plate (121) and the second electrode plate (122) that is disposed on the innermost side of the electrode assembly (120), the support members (351) being spaced apart from each other; and
a deformation preventing member (150) made of an elastically deformable material, the deformation preventing member (150) connecting the support members (351) to each other, the deformation preventing member (150) including an elastic member (352, 353) that generates an elastic force so that the plurality of support members (351) elastically support the electrode assembly (120).

7. The cylindrical rechargeable battery (100, 200, 400) of claim 6, wherein the elastic member (352, 353) includes a plurality of unit springs.

8. The cylindrical rechargeable battery (100, 200, 400) of claim 7, wherein one end of each of the unit springs is connected to an end of another of the unit springs, and the another end of each of the unit springs is connected to a middle portion of one of the support members (351).

9. The cylindrical rechargeable battery (100, 200, 400) of one of claims 6 to 8, wherein the elastic member (352, 353) has a zigzag shape or an arc shape.

10. The cylindrical rechargeable battery (100, 200, 400) of one of claims 6 to 9, wherein each of the support members (351) includes a shape memory alloy or reinforced plastic.

11. The cylindrical rechargeable battery (100, 200, 400) of one of claims 7 to 10, wherein two support members (351) are provided, and the two support members (351) are positioned on opposite sides of a virtual center of the electrode assembly (120), and
wherein the elastic member (352, 353) includes a unit spring connecting the two support members (351), or
wherein the elastic member (352, 353) includes a tube (354) that is filled with fluid (355), with the tube (354) maintaining its shape even when an external force is applied to the tube (354).

12. A cylindrical rechargeable battery (100, 200, 400) comprising:
an electrode assembly (120) that includes a first electrode plate (121), a second electrode plate (122), and a separator (123) interposed between the first electrode plate (121) and the second electrode plate (122), the first electrode plate (121), the second electrode plate (122), and the separator (123) being wound so that an internal space is provided at an innermost side of the electrode assembly (120);
a cylindrical can (110) accommodating the electrode assembly (120); and
a deformation preventing member (150) that is made of an elastically deformable material, the deformation preventing member (150) including a rigid layer (451) attached to one of the first electrode plate (121) and the second electrode plate (122) that is disposed on the innermost side of the electrode assembly (120), and the deformation preventing member (150) including an adhesion layer attaching the rigid layer (451) to the one of the first electrode plate (121) and the second electrode plate (122).

13. The cylindrical rechargeable battery (100, 200, 400) of claim 12, wherein the rigid layer (451) includes a shape memory alloy or reinforced plastic.

14. The cylindrical rechargeable battery (100, 200, 400) of claim 12 or claim 13, wherein the adhesive layer (452) is an adhesive film with an adhesive layer (452) on one surface thereof.

15. The cylindrical rechargeable battery (100, 200, 400) of one of claims 12 to 14, wherein a plurality of rigid layers (451) are provided, and the plurality of rigid layers (451) are spaced apart from each other.
